(19) Europäisches Patentamt
European Patent Office
Office européen des brevets

(11) **EP 2 065 225 B1**

(12) **EUROPEAN PATENT SPECIFICATION**

(45) Date of publication and mention
of the grant of the patent:
**19.10.2011 Bulletin 2011/42**

(51) Int Cl.:
**B60C 9/04** ^(2006.01)

(21) Application number: **08020327.6**

(22) Date of filing: **21.11.2008**

(54) **Pneumatic tire**

Luftreifen

Pneu

(84) Designated Contracting States:
**DE FR**

(30) Priority: **30.11.2007 JP 2007311258**

(43) Date of publication of application:
**03.06.2009 Bulletin 2009/23**

(73) Proprietor: **The Yokohama Rubber Co., Ltd.**
**Minato-ku**
**Tokyo 105-8685 (JP)**

(72) Inventor: **Takahashi, Shuji,**
**c/o The Yokohama Rubber Co., Ltd.**
**Hiratsuka-shi,**
**Kanagawa 254-8601 (JP)**

(74) Representative: **HOFFMANN EITLE**
**Patent- und Rechtsanwälte**
**Arabellastraße 4**
**81925 München (DE)**

(56) References cited:
**EP-A2- 1 745 945     JP-A- 2006 298 162**

**Description**

BACKGROUND OF THE INVENTION

The present invention relates to a pneumatic tire with its carcass layer employing a hybrid cord which has a first twist yarn composed of rayon fibers and a first twist yarn composed of aramid fibers. Particularly, the present invention relates to a pneumatic tire which is lighter in weight and exhibits increased flat-spot resistance while keeping its durability and driving stability. The first twist yarn composed of rayon fibers will be hereinafter referred to as a "rayon first twist yarn," and the first twist yarn composed of aramid fibers will be hereinafter referred to as an "aramid first twist yarn."

Recent developments of vehicles which output a higher horsepower and exhibit higher load performance have placed demand for development of high-performance low-profile tires having such a lower aspect ratio and such a larger rim diameter corresponding to such vehicles. The high-performance low-profile tires are strongly required to exhibit improved flat-spot resistance, as well as improved driving stability and durability in high-speed running. In other words, the high-performance low-profile tires of this type are required to prevent from occurring a phenomenon (or flat spot) in which the contact patch shape is temporarily held flat while the temperature of the tire highly heated by its previous high-speed run decreases after the tire is stop.

As to a pneumatic tire corresponding to the vehicles of the foregoing type, a proposal has been so far made on a pneumatic tire including a two-ply carcass layer composed of rayon cords for the purpose of meeting the requirement of the flat-spot resistance as well as the requirements respectively of the driving stability and the durability (see Japanese patent application Kokai publication No. 2004-352174, for example). However, the pneumatic tire of this type has a problem that its two-ply carcass layer makes the tire heavier in weight. In addition, the two-ply carcass layer causes residual distortion in rubber between the two plies due to the tire's deformation, and thus causes a deterioration of the flat-spot resistance of the tire. With this situation taken into consideration, the tires of this type are required to be lighter in weight, and to exhibit further increased flat-spot resistance, while keeping their durability and driving stability.

A time having an increased flat-spot resistance is known from the document JP-A-2006929-8162.

SUMMARY OF THE INVENTION

An object of the present invention is to provide a pneumatic tire which is lighter in weight and exhibits further increased flat-spot resistance while keeping its durability and driving stability.

A pneumatic tire according to the present invention for the purpose of achieving the object is a pneumatic tire in which a carcass layer is laid between paired right and left bead sections, and in which at least two belt layers are arranged at the outer peripheral side of the carcass layer in a tread section. The pneumatic tire is characterized in that a hybrid cord composed of at least one rayon first twist yarn and at least one aramid first twist yarn is used as reinforcement cords of the carcass layer, the rayon first twist yarn being obtained by imparting first twists to a bundle of rayon fibers, the aramid first twist yarn being obtained by imparting, to a bundle of aramid fibers, first twists in the same direction as that of the first twists of the rayon first twist yarn, and the hybrid cord being obtained by imparting second twists to a bundle of the rayon first twist yarn and the aramid first twist yarn in a direction reverse to the direction of the first twists. In addition, the total fineness of the hybrid cord is in a range of 3500 dtex to 9000 dtex, the second twist coefficient K of the hybrid cord expressed by Equation 1 is in a range of 1700 to 2400, the tensile strength of the hybrid cord is 5.5 cN/dtex or more when absolutely dry, and the elongation percentage of the hybrid cord under a load of 1.8 cN/dtex is 2% to 4% when absolutely dry,

$$K=T\sqrt{(Tr/\rho r+Ta/\rho a)} \qquad \text{… (Equation 1)}$$

where T denotes the number of second twists of the hybrid cord (times/10 cm),
$Tr$ denotes the total fineness of the rayon fibers (unit: dtex),
$\rho r$ denotes the specific gravity of the rayon fibers,
$Ta$ denotes the total fineness of the aramid fibers (unit: dtex), and
$\rho a$ denotes the specific gravity of the aramid fibers.

In the case of the present invention, when the hybrid cord composed of the rayon first twist yarn and the aramid first twist yarn is used as the reinforcement cords of the carcass layer, and currently when the total fineness, the second twist coefficient K, the tensile strength and the elongation percentage of the hybrid cord are set in their respective predetermined ranges, it is possible to employ the characteristics respectively of the rayon fibers and the aramid fibers, and thus to produce the carcass layer with a single-ply structure while keeping the durability and driving stability of the pneumatic tire, as well as hence to decrease the weight of the tire. Furthermore, the carcass layer produced with the single-ply structure is free from the residual distortion of rubber between the two plies in a carcass layer produced with a two-ply structure. This makes it possible to increase the flat-spot resistance.

In the present invention, it is desirable that the permanent tensile distortion of coating rubber of the carcass layer should be 3.0% or less. When the coating rubber with the smaller permanent tensile distortion is additionally used for the carcass layer using the hybrid cord, it is possible to further increase the flat-spot resistance. In this respect, the permanent tensile distortion in the present invention is indicated by a value found from

$$(L2-L1)/L1 \times 100\%$$

where L1 denotes the length (unit: mm) of a rubber piece sampled from the tire, and L2 denotes the length (unit: mm) of the rubber sample piece obtained by: applying distortion to the rubber sample piece through stretching the rubber sample piece by a length equal to 25% of L1; leaving the rubber sample piece thus stretched at 70°C for one hour; thereafter, leaving the rubber sample piece thus stretched at 25°C for 22 hours; subsequently, releasing the rubber sample piece from the stretching distortion; and measuring the resultant rubber sample piece 60 minutes later.

It is desirable that the hybrid cord for the carcass layer should be treated as follows. Before second twists is imparted to the bundle of the rayon first twist yarn and the aramid first twist yarn, the aramid fibers are beforehand steeped in a treatment solution containing a water-soluble epoxy resin, followed by drying. Thereafter, the resultant aramid fibers are thermally treated at a temperature of 200°C to 250C°. After the second twists are imparted to the bundle thereof, the hybrid cord is steeped in a mixed solution of resorcinol formaldehyde latex, followed by drying. The resultant hybrid cord is thermally treated at a temperature of 150°C to 200°C. The use of the two types of treatment solutions makes it possible to avoid degradation of rayon due to the high-temperature thermal treatment while securing a sufficient adhesion for the hybrid cord. This makes it possible to secure a higher strength for the hybrid cord, and thus to increase the durability of the tire.

Moreover, it is desirable that the second twist coefficient K2 of the hybrid cord arranged in at least one location in an overlapping part of the carcass layer should be larger than the second twist coefficient K1 of the hybrid cord arranged in a main body part of the carcass layer, and that the ratio K2/K1 should be in a range of 1.1 to 1.3. When the second twist coefficient K2 of the hybrid cord arranged in the overlapping part of the carcass layer is set larger than the second twist coefficient K1 of the hybrid cord arranged in the main body part of the carcass layer so that the tensile elasticity of the overlapping part is reduced, it is possible to improve the uniformity, and to further increase the driving stability in high speed running.

In addition, it is desirable that a belt cover layer is arranged at an outer peripheral side of the belt layers, and that another hybrid cord composed of aramid fibers and polytetramethylene adipamide fibers is used as reinforcement cords of each of belt cover layer. The use of the hybrid cord composed of the aramid fibers and the polytetramethylene adipamide fibers in the belt cover layer makes it possible to increase the flat-spot resistance, and thus to further increase the driving stability in high speed running.

When the tire is filled with an internal pressure equal to 5% of the normal internal pressure, it is desirable that the tire should have a contour shape which makes an angle θ fall within a range of 1 tao 4.5°, the angle θ being an angle (the descending angle of the tread section) between a line parallel to the axial direction of the tire and a line that is drawn from a center position of a tread surface in the width direction of the tire to a point P where the tread surface intersects a line passing the outermost end of the belt layers, the line being orthogonal to the axial direction of the tire. When, as described above, the descending angle θ of the tread section is set smaller, it is possible to decrease the distortion in the tire shoulder, and accordingly to increase the flat-spot resistance and the durability.

It is desirable that the fineness of the rayon fibers should be 50 % to 70% of the total fineness of the hybrid cord. This percentage allows the hybrid cord to enjoy a better adhesiveness based on the rayon fibers and a better strength based on the aramid fibers.

It is desirable that the number of first twists of the aramid fibers in the hybrid cord should be within a range of 50% to 90% of the number of second twists of the hybrid cord. Fact findings of the inventors suggests that, by setting the the number of first twists of the aramid fibers smaller than the number of second twists of the hybrid cord, it is possible to enhance the elasticity of the hybrid cord particularly when the hybrid cord is stretched by 2.5% to 5.0% of its original length. For this reason, this setting allows the hybrid cord to prevent bending deformation from occurring in the tire side part, and accordingly to increase the flat spot resistance.

The present invention is applicable to various types of pneumatic tires. The present invention brings about a remarkable effect when the present invention is applied to a pneumatic tire with an aspect ratio of 45% or less, with a rim diameter of 18 inches or more, and with a load index of 100 or more.

BRIEF DESCRIPTION OF THE DRAWINGS

Fig. 1 is a meridian half cross-sectional view showing a pneumatic tire according to an embodiment of the present invention.
Fig. 2 is a development showing a chief section of a carcass layer in the pneumatic tire according to the embodiment of the present invention.

DETAILED DESCRIPTION OF THE PREFERRED EMBODIMENT

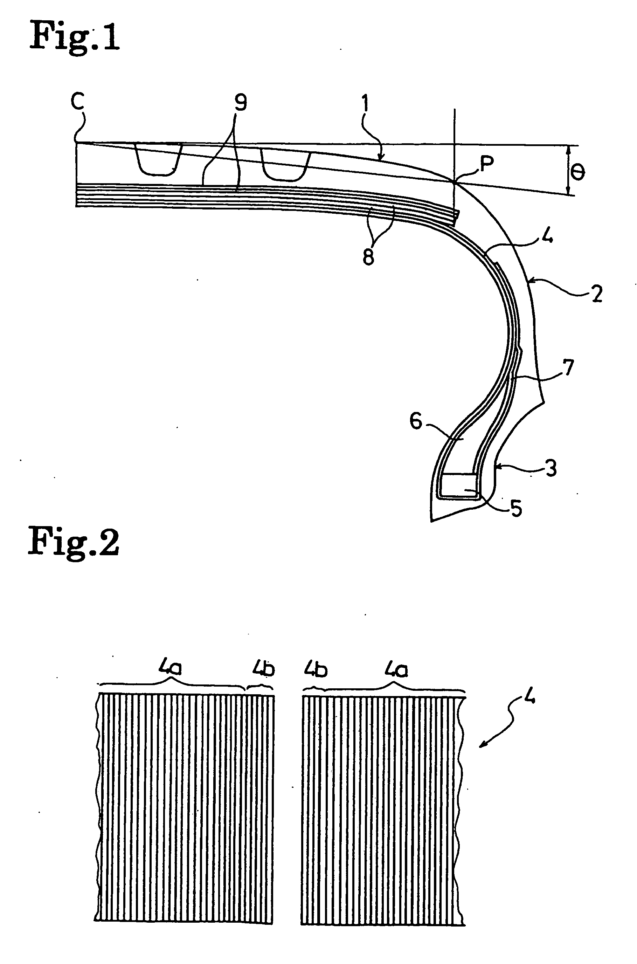

Detailed descriptions will be provided hereinbelow for the configuration according to the present invention by referring to the attached drawings. Fig. 1 shows a pneumatic tire according to the embodiment of the present invention. Reference numeral 1 denotes a tread section; 2, a sidewall section; and 3, a bead section. A carcass layer 4 including multiple reinforcement cords each extending in the tire's radial direction is laid between paired right and left bead sections 3, 3. The end portions of the carcass layer 4 are folded around a bead core 5 from the inside to the outside of the tire. Reference numeral 6 denotes a bead filler made of a rubber composition with a higher hardness, and reference numeral 7 denotes an additional reinforcement layer. Multiple belt layers 8 are embedded at the outer peripheral side of the carcass layer 4 in the tread section 1. These belt layers 8 each include multiple reinforcement cords extending diagonally to the circumferential direction of the tire. The reinforcement cords each are arranged so as to cross each other between the layers. Belt cover layers 9 are arranged at the outer peripheral side of the belt layers 8. The belt cover layers 9 are each made of reinforcement cords wound around the belt layers 8 in the circumferential direction of the tire. It is desirable that each belt cover layer 9 should have a jointless structure in which a strip member is continuously wound around the belt layers 8 in a direction at an angle of substantially 0° to the circumferential direction of the tire. The strip member should be made of at least one reinforcement cord covered with rubber.

In the above-mentioned pneumatic tire, a hybrid cord is used as each reinforcement cord included in the carcass layer 4. The hybrid cord is made by imparting second twists to a bundle composed of at least one rayon first twist yarn and at least one aramid first twist yarn in a direction reverse to that of a first twist. The rayon first twist yarn is obtained by imparting first twists to a bundle of rayon fibers. The aramid first twist yarn is obtained by imparting first twists to a bundle of aramid fibers in the same direction as the first twists are imparted to the bundle of rayon fibers.

It is desirable that the hybrid cord included in the carcass layer 4 should satisfy the following conditions. The total fineness of the hybrid cord is in a range of 3500 dtex to 9000 dtex. The second twist coefficient K of the hybrid cord expressed by Equation 1 is in a range of 1700 to 2400. When the hybrid cord is absolutely dry, the tensile strength of the hybrid cord is 5.5 cN/dtex or more. When the hybrid cord is absolutely dry, the elongation percentage of the hybrid cord under a load of 1.8 cN/dtex is 2% to 4%.

$$K=T\sqrt{(Tr/\rho r+Ta/\rho a)} \qquad \ldots \text{(Equation 1)}$$

where T denotes the number of second twists of the hybrid cord (times/10 cm),
Tr denotes the total fineness of the rayon fibers (unit: dtex),
$\rho r$ denotes the specific gravity (1.51) of the rayon fibers,
Ta denotes the total fineness of the aramid fibers (unit: dtex), and
$\rho a$ denotes the specific gravity (1.44) of the aramid fibers.

When the hybrid cord composed of the rayon first twist yarn and the aramid first twist yarn is used as the reinforcement cord included in the carcass layer 4 of the pneumatic tire, and when the total fineness, second twist coefficient, tensile strength and elongation percentage of the hybrid cord are controlled within a predetermined ranges, it is possible to produce the carcass layer 4 with a single-ply structure while keeping the durability and driving stability of the tire by making use of the characteristics respectively of the rayon yarn and the aramid yarn. This makes it possible to reduce the weight of the pneumatic tire. Specifically, because the tensile strength of the rayon fibers is low, carcass layers of a conventional type have to employ a two-ply structure. As long as the two-ply structure is employed, it is impossible to reduce the weight of the tires. By contrast, the blending of the rayon yarn and the aramid yarn achieves the carcass layer 4 with the single-ply structure. In addition, the production of the carcass layer 4 with the single-ply structure makes the carcass layer 4 free from the residual distortion which occurs in rubber between the two plies in the two-ply carcass layer. This makes it possible to increase the flat-spot resistance.

In this respect, the tensile strength of the absolutely dry hybrid cord is set at 5.5 cN/dtex or more. In a case where the tensile strength thereof is less than 5.5 cN/dtex, the strength thereof is insufficient for the carcass layer 4, and it is thus difficult to produce the carcass layer 4 with the single-ply structure. The tensile strength thereof is measured in accordance with JIS (Japan Industrial Standards) L1017. Specifically, right after a cord sample is dried at 105°C for two hours, a tensile strength test is applied to the cord sample. The tensile strength is a value obtained by dividing the strength (cN) of the cord at the point when the cord breaks by the total fineness (dtex) of the cord.

The elongation percentage of the absolutely dry hybrid cord under the load of 1.8 cN/dtex is set at a value in a range of 2% t0 4%. In a case where the elongation percentage thereof under 1.8 cN/dtex is less than 2%, the durability of the tire decreases. In a case where the elongation percentage thereof under 1.8 cN/dtex is more than 4%, the driving stability of the tire decreases. The elongation percentage of the hybrid cord is measured in accordance with JIS L1017.

The second twist coefficient K of the hybrid cord is set at a value in a range of 1700 to 2400. In a case where the second twist coefficient K thereof is less than 1700, the fatigue resistance of the hybrid cord decreases although the strength of the hybrid cord increases. As a result, the durability of the tire decreases. By contrast, in a case where the second twist coefficient K thereof is more than 2400, ply breakage becomes apt to occur (particularly, the rayon first twist yarn becomes apt to break earlier than the aramid first twist yarn starts to break). As a result, the strength of the hybrid cord reduces to a large extent. This makes it difficult to employ the single-ply structure for the carcass layer 4.

The total fineness of the hybrid cord is set at a value in a range of 3500 dtex to 9000 dtex. In a case where the total fineness thereof is less than 3500 dtex, the strength per cord decreases. As a result, the external damage resistance of the hybrid cord decreases. By contrast, in a case where the total fineness of the hybrid cord is more than 9000 dtex, the cord diameter increases. This not only makes it difficult to secure the essentially necessary strength for the single ply, but also decreases the adhesion of the carcass cord at its end portion so that the fatigue resistance thereof decreases. Moreover, in a case where the total fineness of the hybrid cord is too large, the thickness of the carcass layer increases. As a result, the excess total fineness obstructs the attempt to produce the tire with a lighter weight.

In the case of the hybrid cord, it is desirable that the ratio of the fineness of the rayon fibers to the total fineness should be 50% to 70%. In a case where the ratio of the fineness of the rayon fibers to the total fineness is less than 50%, the aramid fibers content of the hybrid cord becomes relatively larger. As a result, the adhesion of the hybrid cord decreases. By contrast, in a case where the ratio of the fineness of the rayon fibers to the total fineness is more than 70%, the aramid fibers content of the hybrid cord becomes relatively smaller. As a result, the strength of the hybrid cord decreases.

In the case of the foregoing hybrid cord, it is desirable that the number of first twists of the aramid fibers should be within a range of 50% to 90% of the number of second twists of the hybrid cord. Since this setting increases the elasticity of the hybrid cord particularly when the hybrid cord is stretched by 2.5% to 5.0% of its original length, the bending deformation of the tire side part is prevented, and accordingly the flat spot resistance is increased. When the number of first twists of the aramid fibers is less than 50% of the number of second twists of the hybrid cord, the fatigability of the hybrid cord is increased. By contrast, when the number of first twists of the aramid fibers is more than 90% of the number of second twists of the hybrid cord, the effect of increasing the elasticity is not obtained when the hybrid cord is stretched as mentioned above. Note that the number of first twists of the rayon fibers should be equivalent to the number of second twists of the hybrid cord. Specifically, it is desirable that the number of first twists of the aramid fibers should be within 50% to 90% of the number of first twists of the rayon fibers.

In the case of the pneumatic tire, it is desirable that the permanent tensile distortion of coating rubber of the carcass layer 4 should be 3.0% or less. Specifically, the permanent tensile distortion is found from

$$(L2-L1)/L1 \times 100\%$$

where L1 denotes the length (mm) of a rubber piece sampled from the tire, and L2 denotes the length (mm) of the rubber sample piece obtained by: applying stretching distortion to the rubber sample piece by a length equal to 25% of L1; leaving the rubber sample piece thus stretched at 70°C for one hour; thereafter, leaving the rubber sample piece thus stretched at 25°C for 22 hours; subsequently, releasing the rubber sample piece from the stretching distortion; and measuring the resultant rubber sample piece 60 minutes later. It is desirable that the permanent tensile distortion thereof thus found should be 3.0% or less. The length L1 of the rubber piece may be 100 mm, for example. Use of the coating rubber with such a small permanent tensile distortion for the carcass layer 4 reduces the flat spot which occurs due to deformation and the set of the rubber between the neighboring cords in the contact patch of the tire. In addition, as a result of the decrease in the deformation (or the flat spot) which occurs in the tire when the tire resumes to run, it is possible to reduce vibration due to the flat spot, and thus to secure a stable driving stability in high speed running.

It is desirable that one or more kinds of rubber selected from the group consisting of natural rubber (NR), styrene-butadiene rubber (SBR), butadiene rubber (BR), and isoprene rubber (IR) should be used for the coating rubber of the carcass layer 4. In addition, what is obtained by modifying terminals of the rubber (s) thus selected by use of a functional group containing elements such as nitrogen, oxygen, fluorine, chlorine, silicon, phosphorus and sulfur, or by use of an epoxy may be used for the coating rubber of the carcass layer 4. Examples of the functional group include amine, amide, hydroxyl, ester, ketone, siloxy and alkylsilyl.

It is desirable that carbon black satisfying the following conditions should be used to be compounded together with these rubbers. It is desirable that the iodine adsorption number should be 20g/kg to 100 g/Kg, and more preferably 20 g/kg to 50 g/kg. It is desirable that the DBP (Dibutyl Phthalate) absorption number should be $50 \times 10^{-6}$ m³/kg to $135 \times 10^{-6}$ m³/kg, and more preferably $50 \times 10^{-6}$ m³/kg to $100 \times 10^{-6}$ m³/kg. In addition, it is desirable that the specific surface area by CTAB (Cetyl Trimethyl Ammonium Bromide) absorption should be $30 \times 10^3$ m²/kg to $90 \times 10^3$ m²/kg, and more preferably $30 \times 10^3$ m²/kg to $45 \times 10^3$ m²/kg.

Furthermore, it is desirable that the amount of sulfur used for each 100 part by weight of rubber should be 1.5 part by weight to 4.0 part by weight, and more preferably 2.0 part by weight to 3.0 part by weight.

It is desirable that the hybrid cord for the carcass layer 4 should be treated as follows. Before second twists is imparted to the bundle of the rayon first twist yarn and the aramid first twist yarn, the aramid fibers are beforehand steeped in a treatment solution containing a water-soluble epoxy resin, followed by drying. Thereafter, the resultant aramid fibers are thermally treated at a temperature of 200°C to 250C°. After the second twists are imparted to the bundle thereof, the hybrid cord is steeped in a mixed solution of resorcinol formaldehyde latex (RFL), followed by drying. Thereafter, the resultant hybrid cord is thermally treated at a temperature of 150°C to 200°C.

For the purpose of increasing the adhesion between the aramid fibers and the rubber, the hybrid cord needs to undergo an epoxy treatment before undergoing the RFL treatment. In addition, for the purpose of increasing the activity of the epoxy treatment, the treatment temperature is preferably higher (for example, 200°C or higher). However, the rayon fibers have a problem of being easily oxidized because the rayon fibers are mainly consisted of cellulose. With this taken into consideration, the aramid fibers previously undergo the epoxy treatment at high temperature, and thereafter the aramid first twist yarn and the rayon first twist yarn are bundled together. Subsequently, the second twists are imparted to the bundle thereof, and thereby the hybrid cord is formed. After that, RFL as a rubber adhesive is adhered to the hybrid cord. This makes it possible not only to secure a sufficient adhesion, but also to prevent the rayon fibers from degrading. As a result, it is possible to secure a higher strength for the hybrid cord, and to increase the durability of the tire. Note that the aramid fibers may undergo the epoxy treatment when the spun aramid fibers are stretched with heat, instead of the aramid first twist yarn undergoing the epoxy treatment.

Fig. 2 shows a chief section of the carcass layer in the pneumatic tire. The carcass layer 4 is usually made through tying multiple cord fabrics by overlapping parts of each two neighboring cord fabrics together. As a result, as shown in Fig. 2, the carcass layer 4 includes a main body part 4a and an overlapping part 4b. In this case, it is desirable that the second twist coefficient K2 of the hybrid cord arranged in at least one location in the overlapping part 4b of the carcass layer 4 should be larger than the second twist coefficient K1 of the hybrid cord arranged in the main body part 4a of the carcass layer 4, and that the ratio K2/K1 should be in a range of 1.1 to 1.3. In this respect, both the second twist coefficients K1 and K2 have to be in the range of the second twist coefficient K.

When, as described above, the second twist coefficient K2 of the hybrid cord arranged in at least one location in the overlapping part 4b of the carcass layer 4 is set larger than the second twist coefficient K1 of the hybrid cord arranged in the main body part 4a of the carcass cord 4 so that the tensile elasticity of the overlapping part 4b is reduced, it is possible to improve the uniformity, and to further increase the driving stability in high speed running. If the ratio K2/K1 is outside the above-mentioned range, the effect of the increased uniformity is decreased. For the purpose of increasing the second twist coefficient in the overlapping part 4b, the number of the hybrid cords arranged in the overlapping part 4b should be one to five.

Furthermore, in the case of the foregoing pneumatic tire, a hybrid cord composed of aramid fibers and polytetramethylene adipamide fibers (46 nylon) should be used as reinforcement cords of each of the belt cover layers 9. In the case of a high-performance tire, instead of polyhexamethylene adipamide fibers (66 nylon), a hybrid cord composed of aramid fibers and polyhexamethylene adipamide fibers have been often used as reinforcement cords of each belt cover layer 9 for the purpose of increasing the durability in high speed running and the flat-spot resistance. In the case of a tire required to exhibit high-load performance, however, even use of such a hybrid cord can not make it possible to prevent the flat spot sufficiently because of increase in distortion which occurs between the belt layers and increase in heat which is generated by the tire. By contrast, because polytetramethylene adipamide fibers exhibit better heat resistance (or higher glass-transition temperature) than polyhexamethylene adipamide fibers, the combination of polytetramethylene adipamide fibers and aramid fibers makes it possible to increase the flat-spot resistance, and accordingly to realize a more stable driving stability in high speed running.

An example of hybrid cord is obtained by imparting the second twist to a bundle of: two first twist yarn each obtained by imparting first twists to a bundle of aramid fibers with a total fineness of 1670 dtex; and one first twist yarn obtained by imparting first twists to a bundle of polytetramethylene adipamide fibers with a total fineness of 1400 dtex. However, the twist combination is not particularly limited to this example.

Moreover, when the pneumatic tire is filled with an internal pressure equal to 5% of the normal internal pressure, it is desirable that the pneumatic tire should have a contour shape which makes an angle θ fall within a range of 1° to 4.5°. In this respect, the angle θ is an angle between the line parallel to the axial direction of tire and the line drawn from the center position C of the tread surface in the width direction of the tire to a point P. The point P is the point where the tread surface intersects a line passing the outermost end of the belt layers 8, the line being orthogonal to the axial direction of the tire. When, as described above, the descending angle θ of the tread section 1 is set smaller, it is possible to decrease the distortion in the tire shoulder, and accordingly to increase the flat-spot resistance and the durability.

The foregoing detailed descriptions have been provided for the preferred embodiment of the present invention. It shall be understood that the preferred embodiment can be variously modified, and that parts of the preferred embodiment can be substituted and replaced, without departing from the spirit and scope of the present invention as set forth in the appended claims.

EXAMPLES

Pneumatic tires with a tire size of 275/45R19 were made for Conventional Example, Comparative Examples 1 to 3 and Examples 1 to 3. In each tire, a carcass layer was laid between the paired right and left bead sections, two belt layers were arranged at the outer peripheral side of the carcass layer in the tread section, and a belt cover layers was arranged at the outer peripheral side of the belt layers. As shown in Table 1, the material (s) for the carcass cords, the structure of the carcass cords, the number of carcass plies, the end count (ends/50 mm), the total fineness (dtex), the number of second twists (twists/10 cm), the second twist coefficient K, the tensile strength (cN/dtex), the elongation percentage (%) under a load of 1.8 cN/dtex, the material (s) for the belt cover cords, the permanent tensile distortion (%) of the carcass cord rubber, and the tread descending angle θ (°) were changed for each tire.

The hybrid cord which was made for the carcass layer in the following manner was used for Examples 1 to 3 as well as Comparative Examples 2 and 3. A hybrid cord in the making was obtained by imparting second twists to a bundle of a rayon first twist yarn and an aramid first twist yarn. The hybrid cord in the making was steeped in a treatment solution containing a water-soluble epoxy resin, followed by drying. Thereafter, the resultant was thermally treated at 170°C. Subsequently, the hybrid cord in the making thus treated was steeped in a mixed solution of resorcinol formaldehyde latex, followed by drying. Thereafter, the hybrid cord (referred to as "rayon+aramid" in Table 1) was obtained by thermally treating the resultant at 170°C. Note that the number of first twists was equal to the number of second twists for all of the carcass cords.

These test tires were evaluated in terms of the flat-spot resistance, durability, driving stability and tire weight by use of the following evaluation methods. The results of the evaluation are shown in Table 1.

FLAT-SPOT RESISTANCE:

For each of the test tires, the tire uniformity was measured in accordance with JASO (Japanese Automobile Standards Organization) C607 "uniformity testing method for automobile tires." Thereafter, the test tires were run at 150 km/h for 30 minutes for the purpose of a preliminary run. Subsequently, the drum was halted with a load being put each test tire for one hour. After that, the tire uniformity was evaluated for each test tire. Thereby, the difference ΔRFV between the radial force variation prior to the preliminary run and the radial force variation posterior to the preliminary run were obtained for each of the test tires. The obtained evaluation results were indexed in comparison with an evaluation result of the tires according to Conventional Example which were indexed as 100. As the index value becomes smaller, the flat-spot resistance of tire becomes better.

DURABILITY:

By use of an indoor drum testing machine equipped with a drum with a diameter of 1.7m, the test tires were caused to undergo a running test with the following conditions: the air pressure was 120 kPa; a load was 9.6 kN; and a speed was 80 km/h. Thereby, for each test tire, a running distance which the test tire had run until the test tire broke was measured. The obtained evaluation results were indexed in comparison with an evaluation result of the tires according to Conventional Example which were indexed as 100. As the index value becomes larger, the durability of tire becomes better.

DRIVING STABILITY:

The test tires were installed on a test vehicle. By use of a sensor test method, a test driver evaluated the driving stability of the tires by running in a test course. The obtained evaluation results were indexed in comparison with an evaluation result of the tires according to Conventional Example which was indexed as 100. As the index value becomes larger, the index value of the driving stability becomes better.

WEIGHT OF TIRE:

For each of the tires, the weight was measured. The obtained evaluation results were indexed in comparison with an evaluation result of the tire according to Conventional Example which was indexed as 100. As the index value becomes smaller, the weight becomes lighter.

TABLE 1

| | CONVENTIONAL EXAMPLE | COMPARATIVE EXAMPLE 1 | COMPARATIVE EXAMPLE 2 | EXAMPLE 1 | EXAMPLE 2 | EXAMPLE 3 | COMPARATIVE EXAMPLE 3 |
|---|---|---|---|---|---|---|---|
| MATERIAL(S) FOR CARCASS CORDS | RAYON | RAYON | RAYON + ARAMID | RAYON + ARAMID | RAYON + ARAMID | RAYON + ARAMID | RAYON + ARAMID |
| STRUCTURE OF CARCASS CORD | 1840/3 | 1840/3 | 1840*2 + 1670*1 | 1840*2 + 1670*1 | 1840*2 + 1670*1 | 1840*2 + 1670*1 | 1840*2 + 1670*1 |
| NUMBER OF CARCASS PLIES | 2 | 1 | 1 | 1 | 1 | 1 | 1 |
| END COUNT (ends/50 mm) | 48 | 48 | 48 | 48 | 48 | 48 | 48 |
| TOTAL FINENESS (dtex) | 5520 | 5520 | 5350 | 5350 | 5350 | 5350 | 5350 |
| NUMBER OF SECOND TWISTS (times/ 10 cm) | 40 | 40 | 25 | 30 | 35 | 40 | 45 |
| SECOND TWIST COEFFICIENT (CONVERTED BY SPECIFIC GRAVITY) | 2418 | 2418 | 1499 | 1799 | 2099 | 2399 | 2699 |
| TENSILE STRENGTH (cN/ dtex) | 4.4 | 4.4 | 8.0 | 7.4 | 6.6 | 5.7 | 4.7 |
| ELONGATION UNDER A LOAD OF 1.8CN/dtex | 4.0 | 4.0 | 2.0 | 2.5 | 3.1 | 3.8 | 4.6 |

(continued)

| MATERIALS FOR BELT COVER CORDS | ARAMID + 66 NYLON | ARAMID + 66 NYLON | ARAMID + 66 NYLON | ARAMID + 66 NYLON | ARAMID + 66 NYLON | ARAMID + 66 NYLON | ARAMID + 66 NYLON |
|---|---|---|---|---|---|---|---|
| PERMANENT TENSILE DISTORTION OF CARCASS COATING RUBBER (%) | 5 | 5 | 5 | 5 | 5 | 5 | 5 |
| DESCENDING ANGLE(°) | 5.5 | 5.5 | 5.5 | 5.5 | 5.5 | 5.5 | 5.5 |
| FLAT-SPOT RESISTANCE (index), (index) | 100 | 95 | 95 | 95 | 95 | 95 | 95 |
| DURABILITY (index) | 100 | 75 | 70 | 100 | 110 | 105 | 85 |
| DRIVING STABILITY (index) | 100 | 95 | 100 | 100 | 100 | 100 | 95 |
| WEIGHT OF TIRE (index) | 100 | 93 | 93 | 93 | 93 | 93 | 93 |

As clear from Table 1, the tires according to Examples 1 to 3 exhibited an increased flat-spot resistance and were lighter in weight in comparison with the tire according to Conventional Example which had its carcass layer made with the two-ply structure, while exhibiting the durability and driving stability same as or better than the tire according to Conventional Example. On the other hand, the tire according to Comparative Example 1 exhibited the decreased durability and driving stability, because the carcass layer of the tire was made with a single ply structure by use of the same carcass material as was used for the tire according to Conventional Example. The tire according to Comparative Example 2 exhibited a decreased durability, because the second twist coefficient K of the carcass cord was too small. The tire according to Comparative Example 3 exhibited a decreased durability and driving stability, because the second twist coefficient K of the carcass cord was too large, the tensile strength was smaller, and the elongation percentage was too large.

After that, pneumatic tires according to Examples 4 to 8 were made by modifying parts of the configurations of the tire according to Example 2 as shown in Table 2. For each of the tires according to Examples 4 to 8, the permanent tensile distortion of the carcass coating rubber was set at 2%. A hybrid cord made for the carcass layer in the following manner was used for each of the tires according to Examples 5 to 8. Before second twists were imparted to a bundle of a rayon first twist yarn and an aramid first twist yarn, the aramid fibers were beforehand steeped in the treatment solution containing the water-soluble epoxy resin, followed by drying. Thereafter, the resultant aramid fibers were thermally treated at 235°C. Thereafter, a hybrid cord in the making was obtained by imparting the second twist to the bundle thereof. Subsequently, the hybrid cord in the making was steep in the mixture solution of resorcinol formaldehyde latex, followed by drying. After that, the hybrid cord (referred to as "rayon+aramid'" in Table 2) was obtained by thermally treating the hybrid cord in the making at 170°C. For each of the tires according to Examples 6 to 8, three hybrid cords each with a second twist coefficient K of 2399 were arranged in the overlapping part (or a splice part) of the carcass layer. For each of the tires according to Example 7 to 8, another hybrid cord composed of aramid fibers and polytetramethylene adipamide fibers (or 46 nylon) were used as the reinforcement cords of the belt cover layer. For the tire according to Example 8, the descending angle θ of the tread was set at 3.5°.

These test tires were evaluated in terms of the flat-spot resistance, durability, driving stability and tire weight by use of the above-described evaluation methods. The results of the evaluation are shown in Table 2.

TABLE 2

| | CONVENTIONAL EXAMPLE | EXAMPLE 4 | EXAMPLE 5 | EXAMPLE 6 | EXAMPLE 7 | EXAMPLE 8 |
|---|---|---|---|---|---|---|
| MATERIAL(S) FOR CARCASS CORDS | RAYON | RAYON + ARAMID | RAYON + ARAMID' | RAYON + ARAMID' | RAYON + ARAMID' | RAYON + ARAMID' |
| STRUCTURE OF CARCASS CORD | 1840/3 | 1840*2 + 1670*1 | 1840*2 + 1670*1 | 1840*2 + 1670*1 | 1840*2 + 1670*1 | 1840*2 + 1670*1 |
| NUMBER OF CARCASS PLIES | 2 | 1 | 1 | 1 | 1 | 1 |
| END COUNT (ends/50 mm) | 48 | 48 | 48 | 48 | 48 | 48 |
| TOTAL FINENESS (dtex) | 5520 | 5350 | 5350 | 5350 | 5350 | 5350 |
| NUMBER OF SECOND TWISTS (times/10 cm) | 40 | 35 | 35 | 35 | 35 | 35 |

(continued)

| | CONVENTIONAL EXAMPLE | EXAMPLE 4 | EXAMPLE 5 | EXAMPLE 6 | EXAMPLE 7 | EXAMPLE 8 |
|---|---|---|---|---|---|---|
| MATERIAL(S) FOR CARCASS CORDS | RAYON | RAYON + ARAMID | RAYON + ARAMID' | RAYON + ARAMID' | RAYON + ARAMID' | RAYON + ARAMID' |
| SECOND TWIST COEFFICIENT (CONVERTED BY SPECIFIC GRAVITY) | 2418 | 2099 | 2099 | 2099 | 2099 | 2099 |
| TENSILE STRENGTH (cN/dtex) | 4.4 | 6.6 | 6.8 | 6.8 | 6.8 | 6.8 |
| ELONGATION UNDER A LOAD OF 1.8CN/dtex | 4.0 | 3.1 | 3.1 | 3.1 | 3.1 | 3.1 |
| MATERIALS FOR BELT COVER CORDS | ARAMID + 66 NYLON | ARAMID + 66 NYLON | ARAMID + 66 NYLON | ARAMID + 66 NYLON | ARAMID + 46 NYLON | ARAMID + 46 NYLON |
| PERMANENT TENSILE DISTORTION OF CARCASS COATING RUBBER (%) | 2 | 2 | 2 | 2 | 2 | 2 |
| DESCENDING ANGLE(°) | 5.5 | 5.5 | 5.5 | 5.5 | 5.5 | 3.5 |
| FLAT-SPOT RESISTANCE (index) | 100 | 85 | 85 | 95 | 80 | 75 |
| DURABILITY (index) | 100 | 110 | 115 | 120 | 120 | 125 |
| DRIVING STABILITY (index) | 100 | 100 | 100 | 105 | 110 | 110 |
| WEIGHT OF TIRE (index) | 100 | 93 | 93 | 93 | 93 | 93 |
| NOTE | | | | 3 CORDS OF K=2399 ARE USED FOR SPLICE PART | 3 CORDS OF K=2399 ARE USED FOR SPLICE PART | 3 CORDS OF K=2399 ARE USED FOR SPLICE PART |

As clear from Table 2, the tires according to Examples 4 to 8 exhibited an increased flat-spot resistance and were lighter in weight in comparison with the tire according to Conventional Example which had its carcass layer made with the two-ply structure, while exhibiting the durability and driving stability same as or better than the tire according to Conventional Example.

Subsequently, pneumatic tires according to Examples 9 to 11 were produced by changing a part of the configuration of the pneumatic tire according to Example 2 as shown in Table 3. Examples 9 to 11 are made different from one another in the number of first twists of the aramid fibers in the carcass cords. However, the number of first twists of the rayon fibers was made equal to the number of second twists of the carcass cords for all of the carcass cords.

By the foregoing evaluation methods, these experimental tires were evaluated in terms of the flat spot resistance, durability, driving stability and tire weight. The result of the evaluation is shown in Table 3.

TABLE 3

| | CONVENTIONAL EXAMPLE | EXAMPLE 9 | EXAMPLE 10 | EXAMPLE 11 |
|---|---|---|---|---|
| MATERIAL(S) FOR CARCASS CORDS | RAYON | RAYON + ARAMID | RAYON + ARAMID | RAYON + ARAMID |
| STRUCTURE OF CARCASS CORD | 1840/3 | 1840*2 + 1670*1 | 1840*2 + 1670*1 | 1840*2 + 1670*1 |
| NUMBER OF CARCASS PLIES | 2 | 1 | 1 | 1 |
| END COUNT (ends/50 mm) | 48 | 48 | 48 | 48 |
| TOTAL FINENESS (dtex) | 5520 | 5350 | 5350 | 5350 |
| NUMBER OF FIRST TWISTS OF ARAMID FIBERS (times/10 cm) | - | 18 | 25 | 31 |
| NUMBER OF SECOND TWISTS (times/10 cm) | 40 | 35 | 35 | 35 |
| SECOND TWIST COEFFICIENT K (CONVERTED BY SPECIFIC GRAVITY) | 2418 | 2099 | 2099 | 2099 |
| TENSILE STRENGTH (cN/dtex) | 4.4 | 6.7 | 6.7 | 6.6 |
| ELONGATION UNDER A LOAD OF 1.8cN/dtex | 4.0 | 2.7 | 2.9 | 3.1 |
| MATERIALS FOR BELT COVER CORDS | ARAMID + 66 NYLON | ARAMID + 66 NYLON | ARAMID + 66 NYLON | ARAMID + 66 NYLON |
| PERMANENT TENSILE DISTORTION OF CARCASS COATING RUBBER (%) | 5 | 5 | 5 | 5 |

(continued)

| MATERIALS FOR BELT COVER CORDS | ARAMID + 66 NYLON | ARAMID + 66 NYLON | ARAMID + 66 NYLON | ARAMID + 66 NYLON |
|---|---|---|---|---|
| DESCENDING ANGLE(°) | 5.5 | 5.5 | 5.5 | 5.5 |
| FLAT-SPOT RESISTANCE (index) | 100 | 92 | 93 | 93 |
| DURABILITY (index) | 100 | 105 | 108 | 110 |
| DRIVING STABILITY (index) | 100 | 100 | 100 | 100 |
| WEIGHT OF TIRE (index) | 100 | 93 | 93 | 93 |

As clear from Table 3, the tires according to Examples 9 to 11 had a better flat spot resistance than the tire according to Conventional Example including the carcass layer with the two-ply structure, while maintaining durability and driving stability as good as or better than the tire according to Conventional Example. In addition, the tires according to Examples 9 to 11 became lighter in weight.

In the present application "rayon yarn" and "rayon fibers" are to be understood in their common meaning as yarns or fibers of regenerated cellulose or cellulose ester.

In the present application "aramid yarns" and "aramid fibers" are to be understood in their common meaning as yarns or fibers that are produced from polyamides of aromatic diamines and aromatic dicarboxylic acids. It is preferred that at least 85% of amide linkages contained in the polyamides are attached directly to two aromatic rings. As polyamides, for example, poly-p-phenylene terephtalamides such as Kevlar® by Dupont and Twaron® by Teijin Techno Products as well as copoly-p-phenylene-3,4'-oxydiphenylene terephtalamides such as Technora® by Teijin Techno Products are cited.

**Claims**

1.   A pneumatic tire in which a carcass layer (4) is laid between paired right and left bead sections, and in which at least two belt layers (8) are arranged at an outer peripheral side of the carcass layer in a tread section, **characterised in that**
a hybrid cord composed of at least one rayon first twist yarn and at least one aramid first twist yarn is used as reinforcement cords of the carcass layer, the rayon first twist yarn being obtained by imparting first twists to a bundle of rayon fibers, the aramid first twist yarn being obtained by imparting, to a bundle of aramid fibers, first twists in the same direction as that of the first twists of the rayon first twist yarn, and the hybrid cord being obtained by imparting second twists to a bundle of the rayon first twist yarn and the aramid first twist yarn in a direction reverse to the direction of the first twists; and
the total fineness of the hybrid cord is in a range of 3500 dtex to 9000 dtex, the second twist coefficient K of the hybrid cord expressed by Equation 1 is in a range of 1700 to 2400, the tensile strength of the hybrid cord is not less than 5.5 cN/dtex when absolutely dry, and the elongation percentage of the hybrid cord under a load of 1.8 cN/dtex is 2% to 4% when absolutely dry,

$$K=T\sqrt{(Tr/\rho r+Ta/\rho a)} \qquad \text{… (Equation 1)}$$

where T denotes the number of second twists of the hybrid cord (times/10 cm),
Tr denotes the total fineness of the rayon fibers (unit: dtex),
ρr denotes the specific gravity of the rayon fibers,
Ta denotes the total fineness of the aramid fibers (unit:

dtex), and
pa denotes the specific gravity of the aramid fibers.

2. The pneumatic tire according to claim 1, wherein
a permanent tensile distortion of coating rubber of the carcass layer is not more than 3.0%,
wherein the permanent tensile distortion is indicated by a value found from

$$(L2-L1)/L1 \times 100\%$$

where L1 denotes the length (unit: mm) of a rubber piece sampled from the tire, and L2 denotes the length (unit: mm) of the rubber sample piece obtained by: applying distortion to the rubber sample piece through stretching the rubber sample piece by a length equal to 25% of L1; leaving the rubber sample piece thus stretched at 70°C for one hour; thereafter, leaving the rubber sample piece thus stretched at 25°C for 22 hours; subsequently, releasing the rubber sample piece from the stretching distortion; and measuring the resultant rubber sample piece 60 minutes later.

3. The pneumatic tire according to claim 1, wherein
before the second twists is imparted to the bundle of the rayon first twist yarn and the aramid first twist yarn, the aramid fibers are beforehand steeped in a treatment solution containing a water-soluble epoxy resin, followed by drying, and thereafter the resultant aramid fibers are thermally treated at a temperature of 200°C to 250°C,
after the second twists are imparted to the bundle of the rayon first twist yarn and the aramid first twist yarn, the hybrid cord is steeped in a mixed solution of resorcinol formaldehyde latex, followed by drying, and thereafter the resultant hybrid cord is thermally treated at a temperature of 150°C to 200°C.

4. The pneumatic tire according to any one of claims 1 to 3, wherein
the second twist coefficient K2 of the hybrid cord arranged in at least one location in an overlapping part of the carcass layer is larger than the second twist coefficient K1 of the hybrid cord arranged in a main body part of the carcass layer, and
the ratio K2/K1 is in a range of 1.1 to 1.3.

5. The pneumatic tire according to any one of claims 1 to 3, wherein
a belt cover layer is arranged at an outer peripheral side of the belt layers, and
another hybrid cord composed of aramid fibers and polytetramethylene adipamide fibers is used as reinforcement cords of the belt cover layer.

6. The pneumatic tire according to any one of claims 1 to 3, wherein
when the tire is filled with an internal pressure equal to 5% of the normal internal pressure, the tire has a contour shape which makes an angle θ fall within a range of 1° to 4.5°, the angle θ being an angle between a line parallel to an axial direction of the tire and a line that is drawn from a center position of a tread surface in a width direction of the tire to a point P where the tread surface intersects a line passing the outermost end of the belt layers, the line being orthogonal to the axial direction of the tire.

7. The pneumatic tire according to any one of claims 1 to 3, wherein
the ratio of the fineness of the rayon fibers to the total fineness of the hybrid cord is 50% to 70%.

8. The pneumatic tire according to any one of claims 1 to 3, wherein
the number of first twists of the aramid fibers of the hybrid cord is within a range of 50% to 90% of the number of second twists of the hybrid cord.

**Patentansprüche**

1. Pneumatischer Reifen, bei dem eine Karkassschicht (4) zwischen gepaarte rechtsseitige und linksseitige Reifenwulstabschnitte gelegt ist und in dem mindestens zwei Gürtelschichten (8) an einer äußeren peripheren Seite der Karkassschicht in einem Profilabschnitt angeordnet sind, und der **dadurch gekennzeichnet ist, dass**,

ein Hybridseil, das aus mindestens einem einfach verdrehten Rayon-Garn und mindestens einem einfach verdrehten Aramid-Garn zusammengesetzt ist, und als Verstärkungsseile der Karkassschicht verwendet wird, wobei das einfach verdrehte Rayon-Garn durch einfaches Verdrehen eines Bündels von Rayon-Fasern erhältlich ist und das einfach verdrehte Aramid-Garn durch einfaches Verdrehen eines Bündels von Aramid-Fasern in der gleichen Richtung wie das einfache Verdrehen des einfach verdrehten Rayon-Garns erhältlich ist und das Hybridseil durch ein zweites Verdrehen eines Bündels der einfach verdrehten Rayon-Garne und der einfach verdrehten Aramid-Garne in einer umgekehrten Richtung zu den ersten Verdrehungen erhältlich ist; und

der Gesamteinheitsgrad des Hybridseils in einem Bereich von 3.500 dtex bis 9.000 dtex ist, der zweite Verdrehungskoeffizient K des Hybridseils, der durch Gleichung 1 ausgedrückt ist, in einem Bereich von 1.700 bis 2.400 ist, die Zugfestigkeit des vollständig trockenen Hybridseils nicht geringer als 5,5 cN/dtex ist und die prozentuale Dehnung des vollständig trockenen Hybridseils unter einer Last von 1,8 cN/dtex 2 % bis 4 % ist

$$K=T\sqrt{}(Tr(\rho r+Ta/\rho a) \quad ...(Gleichung\ 1)$$

worin T die Anzahl der zweiten Umdrehungen des Hybridseils ist (Anzahl/10 cm),
Tr der Gesamtfeinheitsgrad der Rayon-Fasern ist (Einheit: dtex),
ρr das spezifische Gewicht der Rayon-Fasern ist, Ta der Gesamtfeinheitsgrad der Aramid-Fasern ist (Einheit: dtex) und
ρa das spezifische Gewicht der Aramid-Fasern ist.

2. Pneumatischer Reifen gemäß Anspruch 1, worin die permanente Zugdeformation des Beschichtungskautschuks der Karkassschicht nicht mehr ist als 3,0 % ist,
wobei die permanente Zugdeformation angegebenen ist durch einen Wert aus

$$(L2-L1)/L1\ x\ 100\ \%$$

worin L1 die Länge (Einheit: mm) eines Kautschukprobenstücks aus den Reifen ist, und L2 die Länge (Einheit: mm) eines Kautschukprobenstücks ist, das erhältlich ist durch:

Anwenden einer Verformung des Kautschukprobenstücks durch Strecken des Kautschukprobenstücks um eine Länge von 25 % von L1; Belassen des so gestreckten Kautschukprobenstücks bei 70°C für 1 Stunde; danach Belassen des so gestreckten Kautschukprobenstücks bei 25°C für 22 Stunden; und anschließend Freigeben des Kautschukprobenstücks aus der Streckverformung; und
Vermessen des resultierenden Kautschukprobenstücks nach 60 Minuten.

3. Pneumatischer Reifen gemäß Anspruch 1, wobei vor der zweiten Verdrehung des Bündels aus dem einfach verdrehten Rayon-Garn und dem einfach verdrehten Aramid-Garn, die Aramid-Fasern vorher in einer Behandlungslösung, die ein wasserlösliches Epoxyharz enthält, eingeweicht, anschließend getrocknet und danach die resultierenden Aramid-Fasern bei einer Temperatur von 200°C bis 250°C thermisch behandelt werden,
nach dem zweiten Verdrehen des Bündels aus dem einfach verdrehten Rayon-Garn und dem einfach verdrehten Aramid-Garn das Hybridseil in einer Mischlösung aus Resorcinol-Formaldehyd-Latex eingeweicht und anschließend getrocknet wird, und danach das resultierende Hybridseil bei einer Temperatur von 150°C bis 200°C thermisch behandelt wird.

4. Pneumatischer Reifen gemäß mindestens einem der vorhergehenden Ansprüche 1 bis 3, worin der zweite Verdrehungskoeffizient K2 des Hybridseils, das an mindestens einer Überlappungsstelle der Karkassschicht angeordnet ist, größer ist als der zweite Verdrehungskoeffizient K1, des Hybridseils, das in einen Hauptkörperteil der Karkassschicht angeordnet ist und
das Verhältnis K2/K1 in einem Bereich von 1,1 bis 1,3 ist.

5. Pneumatischer Reifen gemäß mindestens einem der vorhergehenden Ansprüche 1 bis 3, worin eine Gürteldeckschicht an einer äußeren peripheren Seite der Gürtelschichten angeordnet ist und

ein weiteres Hybridseil, das aus Aramid-Fasern und Polytetramethylen-Adipamid-Fasern zusammengesetzt ist, als Verstärkungsseile der Gürteldeckschicht verwendet ist.

6. Pneumatischer Reifen gemäß mindestens einem der vorhergehenden Ansprüche 1 bis 3, worin, wenn der Reifen mit einem internen Druck von 5 % des normalen internen Drucks gefüllt ist, der Reifen eine Konturgestalt aufweist, die einen Winkel θ ausmacht, der in einen Bereich von 1° bis 4,5° fällt, der Winkel θ zwischen einer Parallellinie zu einer Axialrichtung des Reifens und einer Linie ist, die von einer Zentrallage einer Profiloberfläche in der Breite des Reifens zu einem Punkt P gezogen ist, an dem die Profiloberfläche eine Linie schneidet, die das äußerste Ende der Gürtelschichten durchläuft, und die Linie orthogonal zu einer Axialrichtung des Reifens ist.

7. Pneumatischer Reifen gemäß mindestens einem der vorhergehenden Ansprüche 1 bis 3, worin das Verhältnis der Feinheitsgrade der Rayon-Fasern zum Gesamtfeinheitsgrad des Hybridseils 50 % bis 70 % ist.

8. Pneumatischer Reifen gemäß mindestens einem der vorhergehenden Ansprüche 1 bis 3, worin die Anzahl der ersten Verdrehungen der Aramid-Fasern des Hybridseils im Bereich von 50 % bis 90 % der Anzahl der zweiten Verdrehungen des Hybridseils ist.

**Revendications**

1. Bandage pneumatique dans lequel une couche de carcasse (4) est placée entre des sections de talon gauche et droite appariées, et dans lequel au moins deux couches de ceinture (8) sont agencées à un côté périphérique extérieur de la couche de carcasse dans une section de bande de roulement, **caractérisé en ce que**
une corde hybride constituée d'au moins d'un premier fil de torsion en rayonne et d'au moins un premier fil de torsion en aramide est utilisé comme corde de renforcement de la couche de carcasse, le premier fil de torsion en rayonne pouvant être obtenu en conférant des premières torsions à un paquet de fibres de rayonne, le premier fil de torsion d'aramide étant obtenu en conférant, à un paquet de fibres d'aramide, des premières torsions dans la même direction que celle des premières torsions du premier fil de torsion en rayonne, et la corde hybride étant obtenue en conférant des deuxièmes torsions à un paquet du premier fil de torsion en rayonne et du premier fil de torsion en aramide dans une direction inverse à la direction des premières torsions; et
la finesse totale de la corde hybride est dans une plage de 3500 dtex à 9000 dtex, le deuxième coefficient de torsion K de la corde hybride exprimé par l'équation 1 est dans une plage de 1700 à 2400, la résistance à la traction de la corde hybride n'est pas inférieure à 5,5 cN/dtex lorsqu'elle est absolument sèche, et le pourcentage d'allongement de la corde hybride sous une charge de 1,8 cN/dtex est de 2% à 4% lorsqu'elle est absolument sèche,

$$K=T\sqrt{(Tr/\rho r+Ta/\rho a)} \qquad\qquad -(Equation\ 1)$$

où T indique le nombre de deuxièmes torsions de la corde hybride (fois/10 cm),
Tr indique la finesse totale des fibres en rayon (unité: dtex),
pr indique la gravité spécifique des fibres en rayon, Ta indique la finesse totale des fibres d'aramide (unité: dtex), et
pa indique la gravité spécifique des fibres d'aramide.

2. Bandage pneumatique selon la revendication 1, dans lequel une distorsion de traction permanente du caoutchouc de revêtement de la couche de carcasse n'est pas supérieure à 3,0%, où la distorsion de traction permanente est indiquée par une valeur déterminée à partir de

$$(L2-L1)/L1\ x\ 100\%$$

où L1 indique la longueur (unité: mm) d'une pièce en caoutchouc prélevée du bandage, et L2 indique la longueur (unité: mm) de la pièce d'échantillon de caoutchouc obtenue par: appliquer une distorsion à la pièce d'échantillon en caoutchouc en étirant la pièce d'échantillon en caoutchouc sur une longueur égale à 25°C de L1; laisser la pièce d'échantillon en caoutchouc ainsi étirée 70°C pendant une heure; ensuite laisser la pièce d'échantillon en caoutchouc ainsi étirée à 25°C pendant 22 heures; ensuite, libérer la pièce d'échantillon en caoutchouc de la distorsion d'étirage;

et mesurer la pièce d'échantillon de caoutchouc obtenue 60 minutes plus tard.

**3.** Bandage pneumatique selon la revendication 1, dans lequel avant que les deuxièmes torsions ne soient imparties aux paquets du premier fil de torsion en rayonne et du premier fil de torsion en aramide, les fibres d'aramide sont auparavant trempées dans une solution de traitement contenant une résine époxy soluble dans l'eau, suivi du séchage, et ensuite, les fibres aramide obtenues sont traitées thermiquement à une température de 200°C à 250°C, après que les deuxièmes torsions ont été imparties au paquet du premier fil de torsion en rayonne et du premier fil de torsion en aramide, la corde hybride est trempée dans une solution mélangée de latex de résorcinol formaldéhyde, suivi du séchage, et ensuite la corde hybride obtenue est thermiquement traitée à une température de 150° à 200°C.

**4.** Bandage pneumatique selon l'une quelconque des revendications 1 à 3, dans lequel le deuxième coefficient de torsion K2 de la corde hybride agencée dans au moins un emplacement dans une partie de chevauchement de la couche de carcasse est plus grand que le deuxième coefficient de torsion K1 de la corde hybride agencée dans une partie de corps principal de la couche de carcasse, et
le rapport K2/K1 est dans une plage de 1,1 à 1,3.

**5.** Bandage pneumatique selon l'une quelconque des revendications 1 à 3, dans lequel une couche de recouvrement de ceinture est agencée à un côté périphérique extérieur des couches de ceinture, et
une autre corde hybride constituée de fibres d'aramide et de fibres de polytétraméthylène adipamide est utilisée comme corde de renforcement de la couche de recouvrement de ceinture.

**6.** Bandage pneumatique selon l'une quelconque des revendications 1 à 3, dans lequel
lorsque le bandage est rempli avec une pression interne égale à 5% de la pression interne normale, le bandage a une forme de contour qui amène un angle θ à tomber dans une plage de 1° à 4,5°, l'angle θ étant un angle entre une ligne parallèle à une direction axiale du bandage et une ligne qui est tirée d'une position centrale d'une surface de bande de roulement dans le sens de la largeur du bandage à un point P où la surface de bande de roulement se croise avec une ligne passant à l'extrémité la plus extérieure des couches de ceinture, la ligne étant orthogonale à la direction axiale du bandage.

**7.** Bandage pneumatique selon l'une quelconque des revendications 1 à 3, dans lequel le rapport de la finesse des fibres en rayonne à la finesse totale de la corde hybride est de 50% à 70%.

**8.** Bandage pneumatique selon l'une quelconque des revendications 1 à 3,
où le nombre de premières portions des fibres d'aramide de la corde hybride est dans une plage de 50% à 90% du nombre de deuxièmes torsions de la corde hybride.

# Fig.1

# Fig.2

**EP 2 065 225 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004352174 A
- JP 20069298162 A